(19) Europäisches Patentamt
European Patent Office
Office européen des brevets

(11) **EP 4 182 582 B1**

(12) **EUROPÄISCHE PATENTSCHRIFT**

(45) Veröffentlichungstag und Bekanntmachung des Hinweises auf die Patenterteilung:
**17.09.2025 Patentblatt 2025/38**

(21) Anmeldenummer: **21745940.3**

(22) Anmeldetag: **09.07.2021**

(51) Internationale Patentklassifikation (IPC):
*F16H 61/4017* (2010.01)    *F16H 61/4078* (2010.01)
*F16H 61/4148* (2010.01)    *F16H 61/42* (2010.01)
*F16H 61/472* (2010.01)

(52) Gemeinsame Patentklassifikation (CPC):
**F16H 61/4078; F16H 61/4017; F16H 61/4148;**
**F16H 61/42; F16H 61/472;** F16H 59/18;
F16H 61/431; F16H 61/47; F16H 2059/663

(86) Internationale Anmeldenummer:
**PCT/EP2021/069116**

(87) Internationale Veröffentlichungsnummer:
**WO 2022/013083 (20.01.2022 Gazette 2022/03)**

(54) **HYDRAULISCHES SYSTEM, VERFAHREN UND VERWENDUNG DES HYDRAULISCHEN SYSTEMS**

HYDRAULIC SYSTEM, METHOD AND USE OF THE HYDRAULIC SYSTEM

SYSTÈME HYDRAULIQUE, PROCÉDÉ ET UTILISATION DE CE SYSTÈME HYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.07.2020 DE 102020208756**

(43) Veröffentlichungstag der Anmeldung:
**24.05.2023 Patentblatt 2023/21**

(73) Patentinhaber: **Robert Bosch GmbH**
**70442 Stuttgart (DE)**

(72) Erfinder:
• **VOGL, Karl-Heinz**
**88444 Ummendorf (DE)**
• **ERET, Egor**
**89077 Ulm (DE)**
• **BRAND, Michael**
**89075 Ulm (DE)**
• **TETIK, Salih**
**89278 Nersingen (DE)**
• **PFETSCH, Steffen**
**89134 Blaustein (DE)**
• **LINDER, Lukas**
**89129 Langenau (DE)**

(56) Entgegenhaltungen:
EP-A1- 3 464 948    EP-A1- 3 553 349
DE-A1- 102018 217 566    US-A- 5 638 677

**Beschreibung**

Gebiet der Erfindung

Die Erfindung betrifft ein hydraulisches System für eine mobile Arbeitsmaschine, die eine Arbeitshydraulik, wie beispielsweise einen Hydrozylinder, und eine Fahrhydraulik zum Fortbewegen der mobilen Arbeitsmaschine aufweist. Des Weiteren betrifft die Erfindung ein Verfahren mit dem hydraulischen System und eine Verwendung des hydraulischen Systems.

Hintergrund der Erfindung

Aus dem Stand der Technik sind mobile Arbeitsmaschinen bekannt, die ein hydraulisches System aufweisen. Dieses hat eine Arbeitshydraulik und eine Fahrhydraulik. Die Arbeitshydraulik kann beispielsweise einen oder mehrere Hydrozylinder und eine Hydromaschine zur Druckmittelversorgung aufweisen. Die Hydrozylinder werden über entsprechende Ventile gesteuert. Die Fahrhydraulik kann eine oder mehrere Hydromotoren haben, um die mobile Arbeitsmaschine anzutreiben. Das hydraulische System kann als Konstantdrucksystem ausgebildet sein. Dies führt allerdings nachteilig zu einer geringen Energieeffizienz. Außerdem ist es notwendig, Hydrospeicher einzusetzen, die insbesondere für Mobilanwendungen kosten- und wartungsintensiv sind. Bekannt ist auch, die Fahrhydraulik im offenen hydraulischen Kreis auszubilden. Hierbei sind Ventile zur Fahrtrichtungsvorgabe und zur Ölverteilung für einen oder für mehrere Hydromotoren vorgesehen. Zusätzlich kann ein Bremsventil angeordnet sein, um die mobile Arbeitsmaschine zu bremsen. Nachteilig bei diesen konventionellen Fahrantrieben ist der vergleichsweise geringe Wirkungsgrad.

Die DE 10 2018 217 566 A1 offenbart ein hydraulisches System mit eine Arbeits- und mit einer Fahrhydraulik im geschlossenen Kreis. Es sind eine Momentenvorgabe und die Auslegung eine Kennfeldes gezeigt.

Die DE 10 2016 205 891 A1 offenbart ein hydraulisches System mit eine Arbeits- und mit einer Fahrhydraulik im geschlossenen Kreis. Es ist drehmomentbasiertes Fahren gezeigt.

Patentdokument US 5 638 677 A offenbart ein hydraulisches System für eine mobile Arbeitsmaschine nach der Präambel von Anspruch 1.

Offenbarung der Erfindung

Demgegenüber liegt der Erfindung die Aufgabe zugrunde, ein hydraulisches System mit offenem Kreis für eine mobile Arbeitsmaschine zu schaffen, das vorrichtungstechnisch einfach und kostengünstig ausgestaltet ist. Außerdem soll ein Verfahren mit einem hydraulischen System mit offenem Kreis für den Fahrantrieb geschaffen werden, das zu einer einfachen Steuerung und/oder zu einer kostengünstigen und vorrichtungstechnisch einfachen Ausgestaltung des hydraulischen Systems führt. Außerdem ist es die Aufgabe der Erfindung, vorteilhafte Verwendungen des hydraulischen Systems mit offenem Kreis vorzusehen.

Die Aufgabe hinsichtlich des hydraulischen Systems wird gelöst gemäß den Merkmalen des Anspruchs 1, hinsichtlich des Verfahrens gemäß den Merkmalen des Anspruchs 14 und hinsichtlich der Verwendung gemäß den Merkmalen des Anspruchs 18.

Vorteilhafte Weiterbildungen der Erfindung sind Gegenstand der Unteransprüche. Erfindungsgemäß ist ein hydraulisches System für eine mobile Arbeitsmaschine vorgesehen. Dieses hat eine, insbesondere einzelne, Hydromaschine (Primäreinheit) zur Druckmittelversorgung einer Arbeitshydraulik der mobilen Arbeitsmaschine und einer Fahrhydraulik der mobilen Arbeitsmaschine. Die Druckmittelversorgung erfolgt im offenen hydraulischen Kreis. Die Arbeitshydraulik weist zumindest einen hydraulischen Verbraucher auf. Die Fahrhydraulik hat vorzugsweise zumindest eine in ihrem Hubvolumen verstellbare Antriebs-Hydromaschine (Sekundäreinheit), wobei beispielsweise eine verschwenkbare Scheibe vorgesehen ist und/oder die Antriebs-Hydromaschine verschwenkbar ist und/oder als Axialkolbenmaschine mit verschwenkbarer Scheibe ausgebildet ist. Die Fahrhydraulik dient zur Fortbewegung der mobilen Arbeitsmaschine. Die Hydromaschine kann basierend auf einem Soll-Druck gesteuert oder geregelt sein. Die Antriebs-Hydromaschine wird vorzugsweise basierend auf ihrem verstellbaren Schwenkwinkel und/oder verstellbaren Hubvolumen gesteuert oder geregelt. Es ist eine elektronische Systemsteuerung vorgesehen, die den Soll-Druck für die Hydromaschine vorgibt. Dabei ist die elektronische Systemsteuerung derart eingerichtet, dass der Soll-Druck der Hydromaschine als Maximalwert aus einer Soll-Druckvorgabe der Arbeitshydraulik und einer Soll-Druckvergabe der Fahrhydraulik ausgewählt ist. Mit anderen Worten ist der Soll-Druck die höchste Soll-Druckvorgabe der beiden Soll-Druckvorgaben. Der Soll-Druck ist vorzugsweise der Druck, der ausgangsseitig der Hydromaschine vorgesehen ist, also beispielsweise der Systemdruck. Mit anderen Worten kann bei simultaner Fahrt- und Arbeitsfunktion die höchste Druckanforderung in das erfindungsgemäße hydraulische System eingeprägt werden.

Diese Lösung hat den Vorteil, dass nur eine einzelne Hydromaschine notwendig ist, um die Arbeitshydraulik und die Fahrhydraulik mit Druckmittel zu versorgen. Dennoch erfolgt eine Regelung beider Hydrauliken. Es hat sich gezeigt, dass eine derartige Ausgestaltung des hydraulischen Systems insbesondere für mobile Arbeitsmaschinen mit geringer Nutzungsdauer und/oder geringer zeitlicher Überlappung der Arbeits- und Fahrfunktion vorteilhaft ist. Demnach kann eine hohe Fahrperformance erreicht werden, insbesondere bis etwa 35 kW Antriebsleistung. Da die Fahr- und Arbeitshydraulik in einem offenen hydraulischen Kreis kombiniert sind, ist es ausreichend, eine einzelne Hydromaschine zur Druckmittelversorgung vorzusehen. Es kann somit eine Hydraulikpumpe für die Fahrfunktion eingespart werden. Es ist dennoch ein dynamischer Fahrantrieb im offenen hydraulischen Kreis ermöglicht. Insgesamt ist eine hohe Fahrdynamik trotz kostenoptimierten Systemkonzept erreicht. Außerdem ist das hydraulische System vorrichtungstechnisch einfach und kostengünstig ausgestaltet.

Die Soll-Druckvorgabe der Fahrhydraulik hängt von einem Drehmomentwunsch und/oder einem Geschwindigkeitswunsch einer Bedienperson ab.

Denkbar wäre als Bedienperson auch eine autonome oder teilautonome Steuerungseinrichtung oder eine künstliche Intelligenz vorzusehen. Alternativ oder zusätzlich kann die Soll-Druckvorgabe der Fahrhydraulik auch von einer aktuellen Fahrgeschwindigkeit der mobilen Arbeitsmaschine abhängen. Der Drehmomentwunsch und/oder der Geschwindigkeitswunsch sind/ist über zumindest ein entsprechendes Mittel, insbesondere von der Bedienperson, vorgebbar. Beispielsweise kann als Mittel ein Pedal oder Fußpedal oder Joystick vorgesehen sein. Somit kann die Bedienperson direkt Einfluss auf die Soll-Druckvorgabe der Fahrhydraulik nehmen und die Druckmittelversorgung über die Hydromaschine ist somit vorteilhafterweise abhängig von dem Drehmomentwunsch und/oder von dem Geschwindigkeitswunsch und/oder von der Fahrgeschwindigkeit. Somit basiert der Soll-Druck der Hydromaschine auf Anforderungen aus der Fahrfunktion. Mit anderen Worten kann abhängig von der Fahrgeschwindigkeit und der Fahrpedalstellung ein Wunschmoment oder eine Wunschzugkraft als Sollgröße für die Betriebsstrategie ausgegeben werden. Ist die Pedalstellung konstant, so kann dann eine für diese Pedalstellung hinterlegte Zugkraftkennlinie über die Fahrgeschwindigkeit abgefahren werden. Da das Soll-Drehmoment über die Fahrgeschwindigkeit kleiner wird, kann sich abhängig von der Pedalstellung und einem Widerstandsmoment der mobilen Arbeitsmaschine (als Funktion der Geschwindigkeit) ein Gleichgewicht einstellen und die Bedienperson kann über das Pedal die Geschwindigkeit der mobilen Arbeitsmaschine verstellen. Es können Lasten über Hangabtriebskräfte eingehen und eine Lastfühligkeit bei der Bedienperson erzeugen.

Je steiler der Abfall der Zugkraft über der Ist-Geschwindigkeit ist, desto steifer (weniger lastfühlig) wird der Fahrantrieb. Das kann so weit eingestellt werden, dass sich das Fahrverhalten von einer lastunabhängigen Vorgabe des Getriebe- Übersetzungs-Ratios kaum mehr unterscheidet. Darüber hinaus kann das steife Verhalten verbessert werden, indem ein überlagerter Drehzahlregler/Geschwindigkeitsregler die Momentenvorgabe korrigiert, um die gewünschte Geschwindigkeit zu halten. Die gewünschte Geschwindigkeit kann an das Fahrpedal gekoppelt sein.

Im geschlossenen Kreis gemäß der DE 10 2018 217 566 A1 lässt sich die hydraulische Abstützung einfach realisieren, in dem der Motor auf maximalen Schwenkwinkel gestellt wird und die Pumpe auf 0% geregelt wird. Somit stützt sich die mobile Arbeitsmaschine hydraulisch ab. Die Abrollgeschwindigkeit ist lediglich über die Leckage im System definiert.

In der Ausführung im offenen Kreislauf ist eine Abstützung nur möglich, wenn der Schwenkwinkel der Antriebs-Hydromaschine auf die richtige Richtung gestellt wird. (Schwenkwinkel in Richtung Vorwärts- oder Rückwärtsfahrt abhängig von der Stellung im Hang). Eine vorteilhafte Erweiterung der Zugkraftkennlinien ist das Einführen von negativen Geschwindigkeiten. D.h. das Zugkraftkennfeld berücksichtigt die Wunschrichtung der Geschwindigkeit.

Die Arbeitshydraulik ist vorzugsweise über zumindest ein Steuerventil mit der Hydromaschine verbunden. Somit kann bei dem hydraulischen System auf vorrichtungstechnisch einfache Weise eine einfache Ansteuerung der Arbeitshydraulik erfolgen.

Wie vorstehend bereits angeführt, kann die Hydromaschine als einzige Hydromaschine zum Antreiben der Arbeitshydraulik und Fahrhydraulik vorgesehen sein. Somit hat das hydraulische System vorrichtungstechnisch einfach und kostengünstig keine weiteren Hydromaschinen zur Druckmittelversorgung der Arbeitshydraulik und Fahrhydraulik. Selbstverständlich können dennoch eine oder mehrere Hydromaschinen vorgesehen sein, die einen anderen Zweck aufweisen und beispielsweise als Speisepumpe dienen, um Druckmittel in das hydraulische System bei Bedarf nachzuführen.

Vorrichtungstechnisch einfach können die Fahrhydraulik und die Arbeitshydraulik fluidisch parallel mit der Hydromaschine fluidisch verbunden sein. Sie können somit beispielsweise einfach an einem gemeinsamen Druckanschluss der Hydromaschine angeschlossen sein.

In weiterer Ausgestaltung der Erfindung kann die Arbeitshydraulik eine Load-Sensing(LS)-Steueranordnung oder eine Lastdruckunabhängige-Durchflussverteilung(LUDV)-Steueranordnung aufweisen. Es ist denkbar, dass das zumindest eine Steuerventil durch die LS-Steueranordnung oder LUDV-Steueranordnung gebildet ist, was untenstehend näher erläutert ist. Somit ist denkbar, dass der zumindest eine hydraulische Verbraucher über die LS-Steueranordnung oder die LUDV-Steueranordnung gesteuert ist.

Bei der LS-Steueranordnung wird der höchste Lastdruck mehrerer hydraulischer Verbraucher der Arbeitshydraulik als Soll-Druckvorgabe an eine hydraulische Pumpensteuerung oder an die elektronische Systemsteuerung gemeldet. Falls nur ein hydraulischer Verbraucher vorgesehen ist, so wird dessen Lastdruck als höchster Lastdruck gemeldet. Bei üblichen LS-Steueranordnungen wird eine Verstellpumpe, also die oben genannte Hydromaschine dann in Abhängigkeit vom höchsten gemeldeten Lastdruck derart geregelt, dass in der Pumpenleitung - also ausgangsseitig der Hydromaschine - ein um eine bestimmte LS-Druckdifferenz über dem Lastdruck liegender Pumpendruck vorherrscht. Dies ist auch bei dem erfindungsgemäßen hydraulischen System der Fall, wenn die Soll-Druckvorgabe der Arbeitshydraulik höher als die Soll-Druckvorgabe der Fahrhydraulik ist. Ist dies nicht der Fall, so ist die LS-Druckdifferenz größer als bei einer üblichen LS-Steueranordnung. Die LS-Steueranordnung kann weiter für jeden hydraulischen Verbraucher eine verstellbare Zumessblende aufweisen, denen jeweils eine Individualdruckwaage zugeordnet ist. Die Zumessblenden sind dann üblicherweise fluidisch zwischen dem jeweiligen hydraulischen Verbraucher und der jeweiligen Individualdruckwaage vorgesehen. Falls nur ein Verbraucher vorgesehen ist, so ist dann selbstverständlich nur eine Zumessblende und eine Individualdruckwaage angeordnet, wobei die weiteren Ausführungen entsprechend gelten. Die Individualdruckwaagen halten, auch über die Zumessblenden der jeweils lastdruckniederen hydraulischen Verbraucher, eine konstante Druckdifferenz aufrecht. Die Individualdruckwaagen sind bei LS-Steueranordnungen üblicherweise stromauf der Zumessblenden angeordnet und drosseln im Fluidpfad zwischen der Hydromaschine und den Zumessblenden den Fluidstrom so stark an, dass der Druck vor den Zumessblenden unabhängig vom Pumpendruck der Hydromaschine nur noch um eine bestimmte Druckdifferenz über dem individuellen Lastdruck liegt. Hier wird bei Unterversorgung der lastdruckhöchste Verbraucher langsamer, weil der vor dessen Zumessblende anstehende Pumpendruck abfällt und damit die Druckdifferenz über diese Zumessblende kleiner wird.

Bei der LUDV-Steueranordnung sind die Individualdruckwaagen stromabwärts der Zumessblenden angeordnet und drosseln zwischen den Zumessblenden und den Verbrauchern den jeweiligen Fluidstrom so stark an, dass der Druck nach allen Zumessblenden gleich, vorzugsweise gleich dem höchsten Lastdruck ist, oder leicht über diesem liegt. Hier ändert sich bei Unterversorgung an dem Druck stromabwärts der Zumessblenden nichts. Vor allen Zumessblenden steht in gleicher Weise der Pumpendruck an, so dass sich an allen Zumessblenden die Druckdifferenz in gleicher Weise ändert, wenn bei einer Unterversorgung der Pumpendruck kleiner wird, und die Stromaufteilung zwischen den Zumessblenden erhalten bleibt.

Die Soll-Druckvorgabe der LS- oder LUDV-Steueranordnung kann dann aus einem Lastdruck des hydraulischen Verbrauchers oder aus einem höchsten Lastdruck bei mehreren hydraulischen Verbrauchern und der LS-Druckdifferenz gebildet sein. Der höchste Lastdruck wird vorzugsweise über geeignete Mittel erfasst. Ein Öffnungsquerschnitt der Zumessblende/n kann von der Bedienperson nach Bedarf verstellt werden, beispielsweise über einen Joystick.

In weiterer Ausgestaltung der Erfindung ist die Antriebs-Hydromaschine der Fahrhydraulik mit einer Triebwelle verbunden, bei der es sich um eine Antriebswelle und/oder Abtriebswelle, beispielsweise für ein Rad, handeln kann. Ein Soll-Drehmoment der Triebwelle, das über die Antriebs-Hydromaschine aufgebracht werden soll, korrespondiert vorzugsweise mit der Soll-Druckvorgabe der Fahrhydraulik. Somit kann die Antriebs-Hydromaschine, obwohl die Hydromaschine druckgeregelt ist, hinsichtlich ihres Soll-Drehmoments gesteuert werden.

Vorzugsweise ist ein geeignetes Mittel, insbesondere eine oder mehrere Kennlinien, vorgesehen, über das anhand des Drehmomentwunsches und/oder des Geschwindigkeitswunsches und/oder der aktuellen Fahrgeschwindigkeit die Soll-Druckvorgabe der Fahrhydraulik ermittelt ist. Zum Steuern der Antriebs-Hydromaschine kann vorgesehen sein, dass die elektronische Systemsteuerung einen Schwenkwinkel oder ein Hubvolumen der Antriebs-Hydromaschine und/oder eine Drehzahl der Antriebs-Hydromaschine und/oder eine Fahrpedalstellung der Fahrhydraulik und/oder eine Joystickposition und/oder eine Ausgabe eines Fahrtrichtungsschalters für die Antriebs-Hydromaschine über ein geeignetes oder geeignete Mittel erfasst. Für die Korrespondenz der Soll-Druckvorgabe und des Soll-Drehmoments der Antriebs-Hydromaschine wäre auch denkbar, eine oder mehrere Kennfelder vorzusehen.

Es ist denkbar, dass die Antriebs-Hydromaschine und/oder die Hydromaschine durchschwenkbar ist/ sind. Hierdurch kann ein Energiefluss umkehrbar sein. Beispielsweise könnte sich die Antriebs-Hydromaschine an der Hydromaschine mit einem Bremsmoment abstützen. Die Hydromaschine wiederum könnte sich an Ihrer Antriebseinheit abstützen. Somit wäre ein Bremsventil zur Energievernichtung vorrichtungstechnisch einfach nicht mehr notwendig. Es ist somit denkbar, dass das hydraulische System kein Bremsventil aufweist.

Die Soll-Geschwindigkeit und das Soll-Drehmoment der Antriebs-Hydromaschine können voneinander abhängig sein. Vorzugsweise stehen sie über eine Kennlinie oder über Kennlinien oder über ein Kennfeld in Verbindung. Je höher das Drehmoment der Antriebs-Hydromaschine, desto geringer kann die Geschwindigkeit der Antriebs-Hydromaschine sein und umgekehrt. Die Kennlinie kann in einem Diagramm mit einer Ordinate und einer Abszisse ausgebildet sein. Eine der beiden kann die Drehmomentachse und die andere der beiden die Geschwindigkeitsachse bilden. Denkbar ist, die Kennlinie entlang der Drehmomentachse zu verschieben, was untenstehend näher erläutert ist. Somit können beispielsweise die Steigung der Kennlinie und der Geschwindigkeitsbereich gleichbleiben. Es würde sich dann nur der Drehmomentbereich ändern. Die Position der Kennlinie entlang der Drehmomentachse ist vorzugsweise abhängig vom Drehmomentwunsch und/oder vom Geschwindigkeitswunsch und/oder von der Pedalstellung. Die Kennlinie kann nahe dem Drehmoment Null ein Totband über der Geschwindigkeit aufweisen. Dies kann sich als Hysterese bei dem Soll-Drehmoment auswirken und kann ein Oszillieren der Antriebs-Hydromaschine und/oder der Hydromaschine bei einem schnellen Soll-Drehmoment-Vorzeichenwechsel verhindern.

Die Soll-Druckvorgabe, die mit dem Soll-Drehmoment korrespondiert oder davon abhängt, wird vorzugsweise nach unten begrenzt. Je höher die Soll-Druckvorgabe gewählt wird, und je steiler die Kennlinie für die Abhängigkeit zwischen Soll-Drehmoment und Soll-Druckvorgabe, desto höher ist die Dynamik für den Start der Arbeitshydraulik und desto kleiner ist der Schwenkwinkel oder das Hubvolumen der Antriebs-Hydromaschine. Die Begrenzung der Soll-Druckvorgabe wirkt sich positiv bei Soll-Drehmoment-Vorzeichenwechsel aus, da bei einem Durchschwenken der Antriebs-Hydromaschine kleinere Hydromaschinenwinkelwege durchfahren werden müssen.

Erfindungsgemäß ist der Soll-Druck bzw. der gewünschte Systemdruck für die Hydromaschine durch die Maximalwertbildung oder Auswahl des Maximalwerts aus den Soll-Druckvorgaben der Fahr- oder Arbeitsfunktion festgelegt. Um ein gewünschtes Drehmoment an der Antriebs-Hydromaschine bereit zu stellen, kann die Antriebs-Hydromaschine sich an den sich ändernden Soll-Druck anpassen. Dies kann durch Verstellung des Hubvolumens oder Verdrängungsvolumens oder Schwenkwinkels der Antriebs-Hydromaschine erfolgen, was als Sekundärregelung bezeichnet wird. Die Verstellung erfolgt in Abhängigkeit vom Soll-Drehmoment oder Drehmomentwunsch und/oder vom Ist-Druck der Antriebs-Hydromaschine. Vorteilhafterweise kann anhand des Vorzeichens des Drehmomentwunsches oder des Soll-Drehmoments die jeweilige Fahrsituation abgeleitet werden. Beispielsweise bei Vorwärtsfahrt kann bei einem positiven Vorzeichen dann eine Beschleunigung vorliegen und bei einem negativen Vorzeichen eine Verzögerung.

Mit dem Soll-Druck der Hydromaschine, der auf der höchsten Soll-Druckvorgabe basiert, kann vorteilhafterweise der statische Schwenkwinkel der Antriebs-Hydromaschine, beispielsweise über die elektronische Systemsteuerung, gewählt werden. Ist beispielsweise die Soll-Druckvorgabe der Arbeitshydraulik ausgewählt, so kann der Schwenkwinkel der Antriebs-Hydromaschine verkleinert werden, damit das gewünschte Drehmoment oder Soll-Drehmoment sich nicht ungewollt verändert.

Als Maximaldruck des hydraulischen Systems wird für die elektronische Systemsteuerung vorzugsweise der höchste zulässige Systemdruck ausgewählt.

In weiterer Ausgestaltung kann vorzugsweise ein Mittel zum Ermitteln einer Neigung der mobilen Arbeitsmaschine vorgesehen sein. Beispielsweise kann die Neigung zwischen einer festen Ebene der mobilen Arbeitsmaschine gegenüber der Horizontalebene ermittelt sein.

Es ist denkbar, dass die elektronische Systemsteuerung anhand der Neigung und der Masse der mobilen Arbeitsmaschine ein auf die Triebachse oder Drehachse der Antriebs-Hydromaschine wirkendes und daraus resultierendes Drehmoment ermittelt. Das Drehmoment kann dann ein Bestandteil des Soll-Drehmoments sein. Beim Fahren der mobilen Arbeitsmaschine im offenen hydraulischen Kreis wird vorzugsweise mit der Realisierung des Stillstands in der Ebene, an einem Hang oder an einem Gefälle die Antriebs-Hydromaschine in die jeweils passende Richtung geschwenkt, da eine einzige Druckleitung vorhanden ist. Dagegen kann bei einem geschlossenen hydraulischen Kreis gemäß dem Stand der Technik die Hydromaschine in die Nulllage geschwenkt sein und die Antriebs-Hydromaschine stützt sich dann über eine der beiden Druckseiten ab, was bei dem erfindungsgemäßen hydraulischen System nicht möglich ist.

Um den Simultanbetrieb der Arbeits- und Fahrfunktion zu wahren, wird vorzugsweise die Hydromaschine nicht in ihre Nulllage geschwenkt, insbesondere bei Stillstand der mobilen Arbeitsmaschine. Außerdem wird vorzugsweise die Antriebs-Hydromaschine nur in eine Richtung voreingestellt und kann damit nicht gleichzeitig ein Drehmoment für Antrieb und Abtrieb, je nach Hanglage, kompensieren. Um ein Halten bei Stillstand der mobilen Arbeitsmaschine dennoch zu ermöglichen, wird vorzugsweise die Information über die Neigung verwendet. Zusammen mit der Masse kann dann das Drehmoment berechnet werden, um die an der mobilen Arbeitsmaschine angreifenden Hangabtriebskräfte zu kompensieren. Zur Kompensation kann die Kennlinie entlang der Drehmomentachse in Abhängigkeit der Neigung, insbesondere nach oben oder nach unten, verschoben werden (Offset), was obenstehend näher erläutert ist. Mit anderen Worten werden die Zugkraftkennlinien, insbesondere das Zugkraftkennfeld am Fahrpedal, unter Einfluss des Neigungswinkels nach oben oder unten verschoben. Die Verschiebung nach oben, also in einer Richtung einer Erhöhung der Zugkraft, kann soweit erfolgen, dass die mobile Arbeitsmaschine stillsteht und gehalten wird. Soll die Fahrgeschwindigkeit erhöht werden, so wird die Kennlinie nach unten, also in Richtung einer Verkleinerung der Zugkraft verschoben. Dies hat den Vorteil, dass Leistungsbegrenzungen im Kennfeld oder in der Kennlinie nach wie vor eingehalten werden können. Außerdem behält die Bedienperson das Gefühl für die Steigung, weil sie bei steigenden Fahrgeschwindigkeiten mehr oder weniger "Gas" geben muss. Bei einer vollständigen Kompensation würde diese Rückkopplung entfallen. Sie ist vorzugsweise je nach Maß der gewünschten Kompensation frei einstellbar.

In weiterer Ausgestaltung der Erfindung kann als Masse eine mittlere Masse verwendet werden. Dies ist beispielsweise vorteilhaft, wenn die Masse der mobilen Arbeitsmaschine nicht bekannt ist, beispielsweise, wenn sie von Beladezustand abhängt. Die mittlere Masse wird vorzugsweise initial festgelegt.

In weiterer Ausgestaltung der Erfindung ist denkbar, die Hydromaschine mit einer Vorsteuerung zu versehen, um die Regelungsdynamik zu erhöhen. Die Vorsteuerung kann aus der Volumenstrombilanz zwischen der Hydromaschine und den Verbrauchern, also der Arbeitshydraulik und der Fahrhydraulik, gebildet werden. Die Hydromaschine liefert die Druckmittelmenge, die die Verbraucher konsumieren. Die Vorsteuerung ist vor allem bei hochdynamischen Fahrmanövern der mobilen Arbeitsmaschine, wie beispielsweise bei einem Reversieren, von Vorteil. Beim Reversieren wechseln die Hydromaschine und die Antriebs-Hydromaschine zwischen dem Pumpen- und Motorbetrieb. Dieser Wechsel hängt dann am Vorzeichen des Wunschdrehmoments. Ändert sich das Vorzeichen, so kann mit der Vorsteuerung die Hydromaschine zum selben Zeitpunkt wie die Antriebs-Hydromaschine in die jeweils andere Schwenkrichtung geschwenkt werden. Hierdurch werden Druckspitzen vermieden.

In weiterer Ausgestaltung der Erfindung können Ventile für die Arbeitshydraulik oder ein Ventil für die Arbeitshydraulik vorgesehen sein mit der der von der Arbeitshydraulik abfließende Volumenstrom erfassbar ist. Bei dem Ventil oder den Ventilen kann es sich um zumindest eines der Ventile handeln, die bei der LS- oder LUDV-Steueranordnung eingesetzt sind, was obenstehend näher erläutert ist. Beispielsweise kann ein mechanisches oder elektrohydraulisches Cartridge-Ventil als Main Control Valve (MCV) eingesetzt sein. Der ermittelte Volumenstrom kann dann für die Volumenstrombilanz der Vorsteuerung eingesetzt werden. Ist das MCV nicht elektrohydraulisch angesteuert, so ist denkbar, dass der abfließende Volumenstrom über das MCV als Störgröße verwendet wird. Diese Störgröße für die Arbeitshydraulik kann dann über die Druckregelung der Hydromaschine ausgeregelt werden.

In weiterer Ausgestaltung der Erfindung ist denkbar, die Speisepumpe bei dem System vorzusehen. Diese weist beispielsweise ein konstantes Verdrängungsvolumen auf und kann im offenen hydraulischen Kreislauf integriert sein. Die Speisepumpe ist beispielsweise fluidisch zwischen der Hydromaschine und der Fahrhydraulik und/oder Arbeitshydraulik an das hydraulische System angeschlossen. Zum Anschließen kann die Speisepumpe einen Druckanschluss haben. Des Weiteren kann die Speisepumpe einen Tankanschluss aufweisen. Des Weiteren ist denkbar, dass die Speisepumpe über ein Rückschlagventil an das hydraulische System angeschlossen ist, wobei das Rückschlagventil in Druckmittelströmungsrichtung weg von der Speisepumpe aufgesteuert wird.

Fluidisch zwischen dem Rückschlagventil und der Speisepumpe kann ein Druckbegrenzungsventil vorgesehen sein, um einen Speisedruck zu begrenzen. Durch das Rückschlagventil ist garantiert, dass kein Druckmittel aus dem offenen Kreis zur Speisepumpe fließt. Ist der ausgangsseitige Druck der Hydromaschine oder der Systemdruck geringer als der Speisedruck, so fließt Druckmittel von der Speisepumpe in das hydraulische System. Durch die Speisepumpe ist weiter vorteilhaft erreicht, dass im hydraulischen System ein Minimaldruck vorherrscht, nämlich der Speisedruck. Dies ist vorteilhaft, da bei der Hydromaschine und der Antriebs-Hydromaschine ein Mindestdruck aufgrund der Schwenkdynamik notwendig sein kann. Mit der Speisepumpe sind die eigentlichen hydraulischen Funktionen der Arbeits- und Fahrhydraulik nicht ausführbar. Hierfür ist alleine die Hydromaschine als Druckmittelquelle vorgesehen.

Vorrichtungstechnisch einfacher ist es, wenn die Speisepumpe entfällt. Geeignete Vorhalte in den Druckgrenzen und eine dynamische Regelstrategie können stets einen Verstelldruck sicherstellen.

In weiterer Ausgestaltung ist denkbar, dass das hydraulische System ein Druckbegrenzungsventil im offenen hydraulischen Kreislauf aufweist, um den Druck oder Systemdruck ausgangsseitig der Hydromaschine zu begrenzen. Überschreitet der Systemdruck den am Druckbegrenzungsventil eingestellten Maximaldruck, dann fließt Druckmittel über dieses zurück in den Tank. Die im offenen Kreislauf angeordneten Komponenten können somit geschützt werden.

Das Druckbegrenzungsventil kann auch für eine Hochleistungsbremsfunktion genutzt werden. Dabei wird der Schwenkwinkel der Antriebs-Hydromaschine (Sekundäreinheit) abhängig vom erforderlichen Bremsmoment eingestellt, und die Hydromaschine (Primäreinheit) gegen 0 Grad geschwenkt. Dadurch entsteht Maximaldruck im hydraulischen System, die Menge wird über das Druckbegrenzungsventil abgeführt und die hydrostatische Bremsleistung kann größer als die mögliche Stützleistung der Antriebseinheit (z.B. des Dieselmotors) gewählt werden. Das kann zur Einhaltung von gesetzlichen Mindestverzögerungswerten im Notbremsfall vorteilhaft sein, weil auf eine mechanische Proportional-Bremse verzichtet werden kann.

In weiterer Ausgestaltung der Erfindung kann vorgesehen sein, dass bei der LUDV-Steueranordnung ein Ventilschieber der Individualdruckwaage oder ein jeweiliger Ventilschieber einer jeweiligen Individualdruckwaage mit einem künstlichen LS-Druck beaufschlagbar ist/sind. Somit kann/können der/die Ventilschieber entweder mit dem höchsten Lastdruck der Arbeitshydraulik oder bei Bedarf mit dem künstlichen LS-Druck beaufschlagt werden.

Zur Druckbeaufschlagung mit dem künstlichen LS-Druck ist ein entsprechend ausgestaltetes hydraulisches Mittel vorgesehen. Die mögliche Beaufschlagung mit dem künstlichen LS-Druck ist vorteilhaft, da im Betrieb des hydraulischen Systems im offenen hydraulischen Kreis mit der Arbeitshydraulik, die die LUDV-Steueranordnung aufweist, die Soll-Druckvorgabe der Fahrhydraulik signifikant höher als der höchste Lastdruck der Arbeitshydraulik sein kann. Wird in diesem Fall kein künstlicher LS-Druck auf den/die Ventilschieber aufgebracht, dann würde, insbesondere beim Einsatz einer LUDV-Steueranordnung, aufgrund der vorgelagerten Zumessblende/n ein Großteil des Druckmittelvolumenstroms in Richtung der Arbeitshydraulik fließen. Der Druckabfall über die Zumessblende/n wäre dann zu groß. Durch den künstlichen LS-Druck können der hohe Druckabfall und damit der hohe Volumenstrom beim Einsatz einer LUDV-Steueranordnung begrenzt werden. Im Gegensatz dazu wird bei der LS-Steueranordnung oder LS-Scheibe in dem beschriebenen Fall ein zu hoher Druck durch die Individualdruckwaage/n gedrosselt. Mit anderen Worten kann vorgesehen sein, dass ein externes Drucksignal als Lastdruck auf die Individualdruckwaage/n der LUDV-Steueranordnung gegeben wird. Je nach resultierender Differenz zwischen dem Systemdruck bzw. dem von der Hydromaschine aufzubringenden Druck und dem künstlichen LS-Druck sowie dem Öffnungsquerschnitt der Individualdruckwaage/n ergibt sich dann der Volumenstrom über die oder die jeweilige Zumessblende.

Als hydraulisches Mittel kann ein Druckbegrenzungsventil oder ein Druckreduzierventil vorgesehen sein, das stromabwärts von der Hydromaschine zwischen dieser und der Arbeits- und Fahrhydraulik angeschlossen ist. Über das Druckbegrenzungsventil bzw. das Druckreduzierventil kann dann Druckmittel abgezweigt werden, um den künstlichen LS-Druck aufbringen zu können. Der Systemdruck ausgangsseitig der Hydromaschine kann dann mit dem Druckbegrenzungsventil um $\Delta p_{LUDV}$ begrenzt bzw. mit dem Druckreduzierventil um $\Delta p_{LUDV}$ reduziert werden.

Des Weiteren kann ein dem Druckbegrenzungsventil bzw. dem Druckreduzierventil nachgeschaltetes Rückschlagventil vorgesehen sein, das in Druckmittelströmungsrichtung weg von dem Druckbegrenzungsventil bzw. dem Druckreduzierventil öffnet und in entgegengesetzter Richtung schließt. Ausgangsseitig kann das Druckbegrenzungsventil bzw. das Druckreduzierventil dann über das Rückschlagventil mit einem Druckraum oder einem jeweiligen Druckraum der Individualdruckwaage/n verbunden sein, um den oder deren Ventilschieber in Schließrichtung mit dem künstlichen LS-Druck zu beaufschlagen.

In weiterer Ausgestaltung kann bei dem hydraulischen Mittel ein Stromregelventil angeordnet sein, das vorzugsweise zwischen dem Druckbegrenzungsventil bzw. dem Druckreduzierventil und dem Rückschlagventil vorgesehen ist. Dies führt dazu, dass die Menge des Druckmittels, das über das Druckbegrenzungsventil bzw. das Druckreduzierventil abgezweigt wird, gering ist. Beispielsweise kann das Stromregelventil so eingestellt sein, dass 2 l/min über dieses fließen. Stromabwärts des Rückschlagventils ist das Rückschlagventil beispielsweise an die LS-Leitung der Arbeitshydraulik einfach angeschlossen. Bei der LS-Leitung kann es sich um die diejenige Leitung handeln, über die der höchste Lastdruck der Arbeitshydraulik abgegriffen wird. Bei der LS-Leitung kann vorgesehen sein, dass von dieser ein Stromregelventil abzweigt, um überschüssiges Druckmittel zum Tank zu entlassen. Beispielsweise könnte über das Stromregelventil ein Volumenstrom in Höhe von 1 l/min abfließen. Mit dem künstlichen LS-Druck steht ein um $\Delta p_{LUDV}$ geringerer Druck als der Systemdruck zur Verfügung. Der Druckabfall über die Zumessblende/n bei einem Einsatz der LUDV-Steueranordnung ist somit auch bei Verwendung der Soll-Druckvorgabe der Fahrhydraulik auf $\Delta p_{LUDV}$ begrenzt.

In weiterer Ausgestaltung der Erfindung ist die verstellbare Antriebs-Hydromaschine direkt von der Hydromaschine mit Druckmittel versorgt. Fluidisch zwischen der Antriebs-Hydromaschine und der Hydromaschine ist somit zumindest kein, insbesondere kein proportional verstellbares, Wegeventil vorgesehen. Dies ist vorrichtungstechnisch äußerst einfach und kostengünstig. Es ist somit kein Wegeventil notwendig, um die Druckmittelverbindung zwischen der Antriebs-Hydromaschine und der Hydromaschine auf- und zuzusteuern.

Vorzugsweise ist/sind die Antriebs-Hydromaschine und/oder die Hydromaschine als Axialkolbenmaschine(n) ausgestaltet. Insbesondere kann die Hydromaschine oder die jeweilige Hydromaschine als electronified open circuit (EOC-P) Hydromaschine ausgestaltet sein, womit die Hydromaschine oder die jeweilige Hydromaschine vorrichtungstechnisch einfach elektronisch gesteuert sind. Denkbar ist auch, dass die Antriebs-Hydromaschine und/oder die Hydromaschine durchschwenkbar sind. Durch die Durchschwenkbarkeit ist ein Einsatz als Pumpe und Motor ermöglicht.

Die Antriebs-Hydromaschine und die Hydromaschine haben jeweils einen Tankanschluss, über den sie an einen Tank angeschlossen sind. Des Weiteren ist jeweils ein Druckanschluss vorgesehen. Über die Druckanschlüsse ist die Antriebs-Hydromaschine vorzugsweise direkt an die Hydromaschine angeschlossen. Hierdurch ist ein äußerst einfacher hydraulischer Aufbau ermöglicht.

Es wird angemerkt, dass der Übergang von Abrollen in die eine Richtung zu Antreiben in die andere Richtung die Hysterese des doppelten Gesamtwirkungsgrades hydraulisch und mechanisch zum Beispiel in den Achsen, also bis Faktor 2, zur Folge haben kann.

Erfindungsgemäß kann bei einem Verfahren mit einem hydraulischen System gemäß einem oder mehreren der vorhergehenden Aspekte vorgesehen sein, dass über die elektronische Systemsteuerung ein Soll-Druck, insbesondere ausgangsseitig oder am Hochdruckanschluss der Hydromaschine als Maximalwert aus einer Soll-Druckvorgabe der Arbeitshydraulik und einer Soll-Druckvorgabe der Fahrhydraulik ausgewählt wird.

Vorzugsweise kann ein Verdrängungsvolumen oder Schwenkwinkel der Antriebs-Hydromaschine angepasst werden, wenn der Soll-Druck, der über die elektronische Systemsteuerung ausgewählt wird, auf der Soll-Druckvorgabe der Arbeitshydraulik basiert.

Die Anpassung des Verdrängungsvolumens der Antriebs-Hydromaschine erfolgt vorzugsweise dann, wenn der über die elektronische Systemsteuerung ausgewählte Soll-Druck, der auf der Soll-Druckvorgabe der Arbeitshydraulik basiert, höher ist, als von der Fahrhydraulik gefordert. Die Antriebs-Hydromaschine wird vorzugsweise dann derart verschwenkt, dass der Drehmomentwunsch und/oder der Geschwindigkeitswunsch erfüllt ist.

In weiterer Ausgestaltung des Verfahrens ist denkbar, dass zum Verzögern der Fahrhydraulik der mobilen Arbeitsmaschine die Antriebs-Hydromaschine einen derartigen Schwenkwinkel aufweist, dass diese als Hydropumpe wirkt und sich über die Hydromaschine an der Antriebseinheit abstützt. Als Antriebseinheit für die Hydromaschine ist beispielsweise ein Verbrennungsmotor und/oder ein Elektromotor vorgesehen. Somit ist kein Bremsventil zum Vernichten von Energie notwendig.

Bei reinem Fahrwunsch ohne aktivierte Arbeitsfunktion wird das Wunschmoment über eine Sollmoment-zu-Druck-Kennlinie in einen Wunsch-Druck überführt. Mittels dieser Soll-Druckvorgabe kann der statische Schwenkwinkel der Antriebs-Hydromaschine gewählt werden, da z.B. bei hoher Druck-Bewertung und dem gleichen Soll-Moment ein geringerer Schwenkwinkel der Antriebs-Hydromaschine resultiert. Als Maximaldruck wird der höchst zulässige Systemdruck gewählt.

Die Sollmoment-zu-Druck-Kennlinie kann nach Wirkungsgradgesichtspunkten optimiert werden, sodass sich aus den druck- und schwenkwinkelanhängigen Wirkungsgraden der beiden Hydromaschinen eine wirkungsgradoptimale Ansteuerung ergibt. Dabei können Druck und Schwenkwinkel der Antriebs-Hydromaschine im Sekundärregelungskonzept gegeneinander optimiert werden.

Das Wunschdrehmoment für den Fahrantrieb wird an der Hydromaschine (Pumpe) eingeregelt. Dieses Drehmoment ergibt sich aus dem Druck und dem Schwenkwinkel. Man hat somit zwei Freiheitsgrade, um das Wunschdrehmoment einzuregeln. Ein erstes Extremum ist, dass man bei maximalem Druck fährt und die Variation des Moments der Antriebs-Hydromaschine (des Motors) über den Schwenkwinkel einregelt. Die Druckregelung ist in der Regel weniger dynamisch als die Schwenkwinkelregelung, da die Schwenkwinkelregelung unabhängig vom System ist im Gegensatz zu der Druckregelung, wo man die Systemreaktion als zusätzliche Trägheit hat (Druckaufbau ist durch Kapazität und Steifigkeit des Systems bestimmt). Diese Regelung aber führt zu einer ungünstigen Wirkungsgradsituation (hohe Leckage, kleine Schwenkwinkel der Antriebs-Hydromaschine bzw. des Motors). Auf der anderen Seite ist ggfs. die dynamische Reaktion besser, da immer ausreichend Druck vorhanden ist und die Winkelregelung schnell das Drehmoment im gewünschten Bereich anpassen kann.

Ein zweites Extremum ist, dass man die Antriebs-Hydromaschine (den Motor) auf möglichst große Schwenkwinkel stellt und den minimal möglichen Druck einregelt. Somit würde die Antriebs-Hydromaschine immer mit maximalem Schwenkwinkel betrieben werden, was auch vom Wirkungsgrad optimal wäre. Ein Nachteil dieses Extremums aber ist, dass die Hydromaschine (Pumpe) immer große Fördervolumen liefert und keine Regelreserve mehr besitzt und sich somit immer am Förderstromlimit befindet. Dies kann in dynamischen Situationen (Lasten beim Fahren ändern sich, Hangabtrieb oder Steigung, dynamisches Beschleunigen) dazu führen, dass diese Lastschwankung nicht mehr ausgeregelt werden kann und der Druck zusammenbricht. Der minimal mögliche Druck des zweiten Extremums lässt sich über die Volumenstrombilanz berechnen.

Nachfolgend sind beide Berechnungsvorschriften gegeben. Beiden Berechnungen liegt die Volumenstrombilanz zugrunde:

- 

$$VgMot_{max,tgt} = \left(\frac{Q_{pmp}-Q_{work,tgt}}{n_{act}}\right); 0 < VgMot_{max} < VgMot\_size$$

- 

$$pMin, maxAngle, tgt = \frac{Tq_{tgt,drv}*2*PI}{\eta_{mh}*VgMot_{max,tgt}} ; \texttt{p\_min.system < pMin,tgt < p\_max.system}$$

- 

$$pMax, minAngle, tgt = \frac{Tq_{tgt,max@rpm}*2*PI}{\eta_{mh}*VgMot_{max,tgt}} ; \texttt{p\_min.system < pMin,tgt < p\_max.system}$$

Bei einer besonders bevorzugten Weiterbildung des Verfahrens wird die Soll-Druckvorgabe der Fahrhydraulik (Fahranforderung) gebildet, in dem zwischen diesen beiden Extremen abhängig von der Fahrsituation gewichtet wird. Damit kann wirkungsgradoptimal gefahren werden und es kann genug dynamische Reserve für die Regelung der Hydromaschine (Pumpe) vorgesehen sein. Z.B. kann eine überwiegende Gewichtung des zweiten Extremums (pMin, maxAngle) erfolgen, um gutes Anfahren zu gewährleisten. Bei höheren Fahrgeschwindigkeiten und/oder höherer Arbeitshydraulikmenge kann eine stärkere Gewichtung des ersten Extremums (pMax, minAngle) erfolgen.

Erfindungsgemäß wird das hydraulische System bei einer Hubarbeitsbühne oder bei einem Vorderlader oder bei Radlader oder Telehandler verwendet.

Offenbart ist ein hydraulisches System für eine mobile Arbeitsmaschine. Das System hat eine Arbeitshydraulik und eine Fahrhydraulik, die jeweils eine Soll-Druckvorgabe aufweisen, wobei die jeweilige Soll-Druckvorgabe anhand von Mitteln ermittelt wird. Eine elektronische Systemsteuerung wählt dann die höhere Soll-Druckvorgabe aus und bildet daraus einen Soll-Druck, der zur Regelung einer einzigen Hydromaschine verwendet wird. Die einzige Hydromaschine wird dann gleichzeitig zur Druckmittelversorgung der Arbeitshydraulik und der Fahrhydraulik eingesetzt.

Im Folgenden soll die Erfindung anhand schematischer Ausführungsbeispiele näher erläutert werden. Die Figuren zeigen:

Figur 1 in einer schematischen Darstellung ein hydraulisches System gemäß einem Ausführungsbeispiel,

Figur 2 in einer schematischen Darstellung einen Teil des hydraulischen Systems gemäß einem weiteren Ausführungsbeispiel,

Figur 3 in einem schematischen Ablaufdiagramm ein Verfahren für das hydraulische System gemäß einem Ausführungsbeispiel,

Figur 4 ein Zugkraftkennfeld, und

Figur 5 ein weiteres Zugkraftkennfeld.

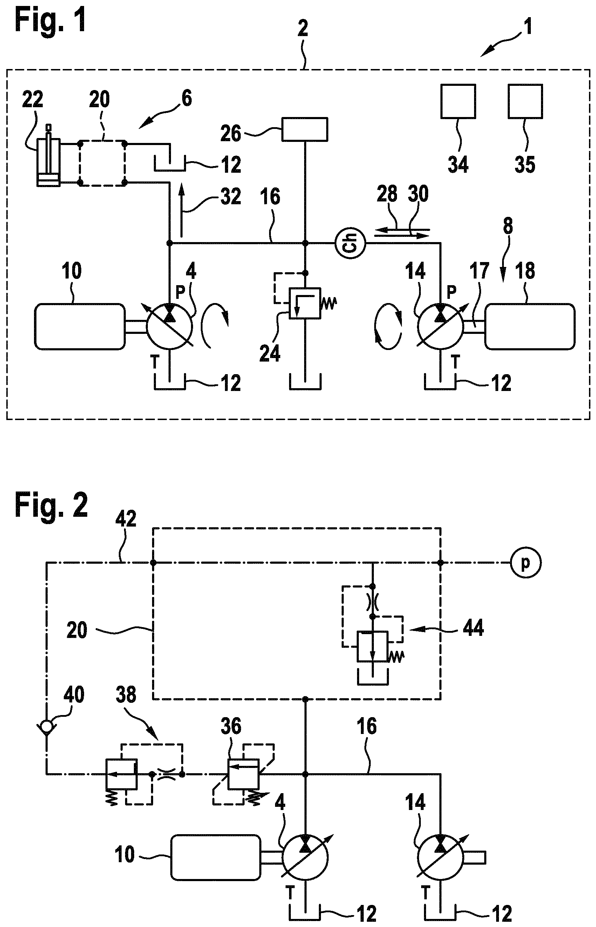

In Fig. 1 ist ein hydraulisches System 1 dargestellt. Dieses wird beispielsweise bei einem Vorderlader 2 verwendet, der schematisch in Fig. 1 mit einer Strichlinie dargestellt ist. Das System 1 weist eine Hydromaschine 4 auf, die durchschwenkbar ist. Diese dient zur Druckmittelversorgung einer Arbeitshydraulik 6 und einer Fahrhydraulik 8. Die Hydromaschine 4 wird über eine Antriebseinheit in Form eines Verbrennungsmotors 10 angetrieben. Die Hydromaschine 4 hat einen Tankanschluss T, über den diese mit einem Tank 12 verbunden ist. Des Weiteren hat die Hydromaschine 4 einen Druckanschluss P. An diesem ist direkt, also ohne Zwischenschaltung von proportional verstellbaren Wegeventilen, eine Antriebs-Hydromaschine 14 angeschlossen. Diese weist ebenfalls einen Druckanschluss P und einen Tankanschluss T auf. Über den Tankanschluss T ist die Antriebs-Hydromaschine 14 mit dem Tank 12 verbunden und über den Druckanschluss P an den Druckanschluss P der Hydromaschine 4 angeschlossen. Zwischen den Druckanschlüssen P der Hydromaschinen 4 und 14 ist eine Systemdruckleitung 16 vorgesehen. Die Antriebs-Hydromaschine 14 ist durchschwenkbar und als Hydromotor und Hydropumpe einsetzbar. Über eine Triebwelle 17 ist die Antriebs-Hydromaschine 14 mit einem Getriebe 18 verbunden. Über dieses kann zumindest ein Rad angeschlossen sein, um den Vorderlader 2 zu bewegen.

Die Arbeitshydraulik 6 ist ebenfalls an den Druckanschluss P der Hydromaschine 4 fluidisch parallel zur Fahrhydraulik 8 angeschlossen. Die Arbeitshydraulik 6 weist eine Steueranordnung 20 auf, die ein oder mehrere Ventile haben kann. Die Steueranordnung 20 ist beispielsweise als Steuerblock ausgebildet und kann eine oder mehrere Ventilscheiben aufweisen. Bei der Steueranordnung 20 handelt es sich beispielsweise um eine Load-Sensing(LS)-Steueranordnung oder um eine Lastdruckunabhängige-Durchflussverteilung(LUDV)-Steueranordnung. Neben der Steueranordnung 20 weist die Arbeitshydraulik 6 einen Verbraucher in Form eines Hydrozylinders 22 auf. Dieser ist an die Steueranordnung 20 angeschlossen. Die Steueranordnung 20 hat des Weiteren einen Tankanschluss zum Anschließen an den Tank 12.

Des Weiteren ist gemäß Fig. 1 ein Druckbegrenzungsventil 24 vorgesehen, das den Druck oder Systemdruck in der Systemdruckleitung 16 begrenzt. Außerdem weist das hydraulische System 1 eine Speisepumpe 26 auf. Diese ist an die Systemdruckleitung 16 angeschlossen, also fluidisch zwischen der Hydromaschine 4 und der Arbeitshydraulik 6 und der Fahrhydraulik 8, und fördert bei Bedarf Druckmittel in die Systemdruckleitung 16. Die Speisepumpe 26 kann hierfür an den Tank 12 angeschlossen sein. Gemäß Fig. 1 kann Druckmittel in der Systemdruckleitung 16 zwischen der Hydromaschine 4 und der Antriebs-Hydromaschine 14 in zwei Fließrichtungen 28, 30 fließen. Zwischen der Abzweigung zur Arbeitshydraulik 6 und der Arbeitshydraulik 6 kann Druckmittel in eine Fließrichtung 32 fließen, nämlich hin zur Steueranordnung 20.

Des Weiteren hat das hydraulische System 1 eine elektronische Systemsteuerung 34. Über diese kann eine Soll-Druckvorgabe der Arbeitshydraulik 6 erfasst werden. Bei der Soll-Druckvorgabe handelt es sich um den Lastdruck des Hydrozylinders 22. Außerdem erfasst die elektronische Systemsteuerung 34 eine Soll-Druckvorgabe der Fahrhydraulik 8. Dies korrespondiert mit einem Drehmomentwusch und/oder mit einem Geschwindigkeitswunsch $v_{soll}$ einer Bedienperson, der beispielsweise über ein Fußpedal vorgegeben wird. Aus den Soll-Druckvorgaben wählt dann die elektronische Systemsteuerung 34 die höhere aus. Die höchste Soll-Druckvorgabe dient dann als Soll-Druck basierend auf dem die Hydromaschine 4 von der elektronischen Systemsteuerung 34 geregelt wird. Der Einfachheit halber sind in der Fig. 1 die Verbindungen und Mittel zum Erfassen der vorstehend erläuterten Größen und der nachfolgend angeführten Größen nicht eingezeichnet. Falls der Soll-Druck auf der Soll-Druckvorgabe der Arbeitshydraulik 6 basiert, also höher ist, als er für die Fahrhydraulik 8 vorgegeben ist, so kann die elektronische Systemsteuerung 34 die Arbeits-Hydromaschine 14 derart ansteuern oder verschwenken, dass der Drehmomentwunsch und/oder der Geschwindigkeitswunsch $v_{soll}$ der Bedienperson erfüllt ist.

Des Weiteren kann die elektronische Systemsteuerung 34 über entsprechende Mittel Systemgrößen wie den Systemdruck ausgangsseitig der Hydromaschine 4, also beispielsweise am Druckanschluss P, erfassen. Alternativ oder zusätzlich kann ein Schwenkwinkel der Hydromaschine 4 und/oder Antriebs-Hydromaschine 14 erfasst werden. Alternativ oder zusätzlich ist denkbar, die Drehzahl der Hydromaschine 4 und/oder der Antriebs-Hydromaschine 14 zu erfassen. Alternativ oder zusätzlich kann eine Fahrpedalstellung und/oder ein Fahrtrichtungsschalter und/oder eine Joystickstellung erfasst werden. Die elektronische Systemsteuerung 34 kann dann basierend auf einer oder mehreren der genannten Systemgrößen den Soll-Druck für die Hydromaschine 4 ermitteln und einen Soll-Schwenkwinkel für die Antriebs-Hydromaschine 14. In Abhängigkeit von den Anforderungen aus der Fahrhydraulik 8 (Drehmomentwunsch und/oder Geschwindigkeitswunsch $v_{soll}$) und der Arbeitshydraulik 6 (höchster Lastdruck und/oder Volumenstromwunsch) kann der jeweils notwendige höchste Druck in das hydraulische System 1, also stromabwärts der Hydromaschine 4, eingeprägt werden. Somit erfolgt eine Vereinigung der Fahrhydraulik 8 und der Arbeitshydraulik 6 in einem offenen hydraulischen Kreis oder Kreislauf, womit eine Hydromaschine für die Arbeitshydraulik 6 im Vergleich zum Stand der Technik eingespart werden kann.

Das hydraulische System 1 ist als offener hydraulischer Kreis ausgestaltet. Wäre dagegen ein geschlossener hydraulischer Kreis vorgesehen, wie beispielsweise bei der Anwendung in einer Hubarbeitsbühne, wie im Stand der Technik, wäre dies nachteilig.

Bei einer Hubarbeitsbühne gemäß Stand der Technik werden beispielsweise hauptsächlich Arbeiten in einem mit einer Arbeitshydraulik verbundenen Korb ausgeführt. Die Hubarbeitsbühne steht dann an einer Position und verwendet somit primär die Arbeitshydraulik. Der Verbrennungsmotor der Hubarbeitsbühne müsste allerdings im Standby-Betrieb trotzdem zwei Hydromaschinen bzw. Pumpen antreiben, nämlich die der Fahrhydraulik und die der Arbeitshydraulik.

Da bei dem erfindungsgemäßen hydraulischen System 1 gemäß Fig. 1 allerdings kein geschlossener hydraulischer Kreis vorgesehen ist, kann somit eine einzige Hydromaschine 4 für die Arbeitshydraulik 6 und die Fahrhydraulik 8 eingesetzt sein, was zu einer Effizienzsteigerung und Preisoptimierung führt. Mit der durchschwenkbaren Hydromaschine 4 und der durchschwenkbaren Antriebs-Hydromaschine 14, die als Electronic-Open-Circuit(EOC)-Hydromaschinen ausgebildet sind, kann der Vor- und Rückwärtsfahrbetrieb abgebildet werden. Beim hydrostatischen Verzögern können die Hydromaschine 4 und die Antriebs-Hydromaschine 14 zwischen einem Pumpen- und einem Motorbetrieb wechseln. Hierdurch kann Bremsenergie am Verbrennungsmotor 10 abgestützt werden, indem die Antriebs-Hydromaschine 14 als Pumpe und die Hydromaschine 4 als Motor eingesetzt wird. Oder die von der Antriebs-Hydromaschine 14 geförderte Druckmittelmenge steht der Arbeitshydraulik zur Verfügung.

Eine hochdynamische Regelung der EOC-Hydromaschinen 4, 14 generiert einen dynamischen Fahrantrieb. Die Fahrtrichtung ist durch entsprechende Schwenkrichtung der Antriebs-Hydromaschine 14 einstellbar.

Gemäß Fig. 1 ist außerdem ein Neigungssensor 35 vorgesehen, um die Neigung der mobilen Arbeitsmaschine 2 zu erfassen. Die Neigung wird der elektronischen Systemsteuerung 34 gemeldet.

Gemäß Fig. 2 ist die Hydromaschine 4 und die Antriebs-Hydromaschine 14 gezeigt. Außerdem ist die Steueranordnung 20 dargestellt. Die beiden Anschlüsse der Steueranordnung 20 und der damit verbundene mindestens eine Verbraucher 22 der Arbeitshydraulik sind nicht gezeigt.

Die Hydromaschine 4 ist über den Verbrennungsmotor 10 antreibbar. Fluidisch zwischen der Hydromaschine 4 und der Steueranordnung 20 bzw. der Antriebs-Hydromaschine 14 zweigt ein Druckbegrenzungsventil oder ein Druckreduzierventil 36 ab. Im Nachgang zu dem Druckbegrenzungsventil bzw. dem Druckreduzierventil 36 ist ein Stromregelventil 38 vorgesehen, also stromabwärts des Druckbegrenzungsventils bzw. des Druckreduzierventils 36. Wiederum stromabwärts vom Stromregelventil 38 ist ein Rückschlagventil 40 vorgesehen. Dieses öffnet in Strömungsrichtung weg von dem Stromregelventil 38. Damit sind das Druckbegrenzungsventil bzw. das Druckreduzierventil 36, das Stromregelventil 38 und das Rückschlagventil 40 fluidisch in Reihe angeordnet.

Das Rückschlagventil 40 ist an eine Lastmeldeleitung 42 der Steueranordnung 20 angeschlossen. Über die Lastmeldeleitung 42 wird der höchste Lastdruck der Verbraucher der Arbeitshydraulik 6 abgegriffen. Gemäß Fig. 1 ist dies der Lastdruck des Hydrozylinders 22. Ist der Lastdruck der Lastmeldeleitung 42, also beispielsweise der Lastdruck des Hydrozylinders aus Fig. 1 größer als der über das Druckbegrenzungsventil bzw. das Druckreduzierventil 36 abgezweigte Druck, so ist das Rückschlagventil 40 geschlossen. Über das Druckbegrenzungsventil bzw. das Druckreduzierventil 36 wird der Systemdruck der Systemdruckleitung 16 um eine Druckdifferenz $\Delta p_{LUDV}$ reduziert. Druckmittel stromabwärts des Druckmittelbegrenzungsventils bzw. das Druckreduzierventil 36 wird für einen künstlichen LS-Druck verwendet. Ist dieser höher als der über die Lastmeldeleitung 42 abgegriffene Lastdruck, beispielsweise des Hydrozylinders 22, so öffnet das Rückschlagventil 40, und der künstliche LS-Druck wird zum Steuern einer Individualdruckwaage oder mehrerer Individualdruckwaagen der Steueranordnung 20 eingesetzt. Der künstliche LS-Druck ist insbesondere dann höher, wenn die Hydromaschine 4 basierend auf der Soll-Druckvorgabe der Antriebs-Hydromaschine 14 gesteuert wird. Somit steht für die Arbeitshydraulik 6 in diesem Fall mehr Druck zur Verfügung, als benötigt wird. Des Weiteren ist ein Stromregelventil 44 vorgesehen, das von der Lastmeldeleitung 42 abzweigt und mit einem Tank ausgangsseitig verbunden ist.

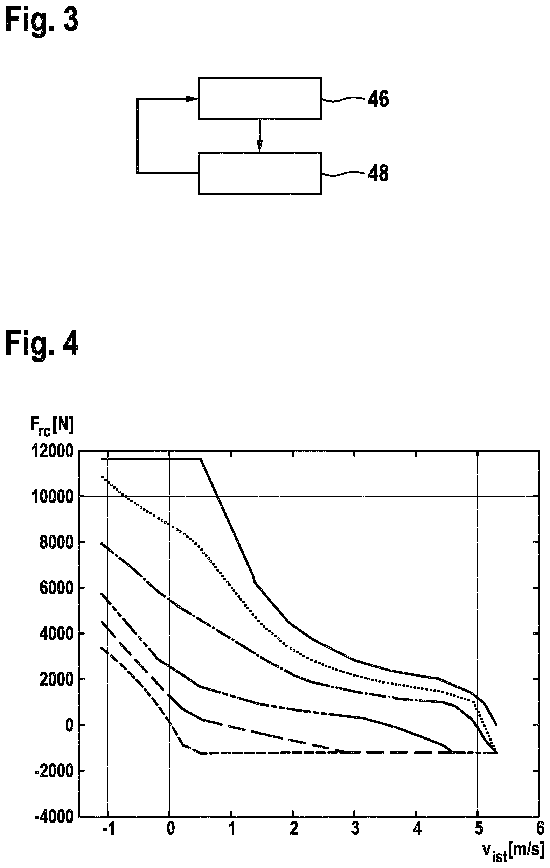

Gemäß Fig. 3 ist ein stark vereinfacht ein Verfahren mit dem hydraulischen System 1 aus Fig. 1 gezeigt. In einem ersten Schritt 46 wird von der elektronischen Systemsteuerung 34 der Soll-Druck zur Steuerung der Hydromaschine 4 ermittelt. Dieser entspricht entweder der Soll-Druckvorgabe der Arbeitshydraulik 6 oder der Soll-Druckvorgabe der Fahrhydraulik 8, wobei hierbei die höchste Soll-Druckvorgabe verwendet wird. Der Soll-Druck basiert somit auf der höchsten Soll-Druckvorgabe. Im nächsten Schritt 48 wird dann die Hydromaschine 4 basierend auf dem Soll-Druck aus Schritt 46 gesteuert. Im Anschluss daran erfolgt wieder der Schritt 46 und somit die Ermittlung des Soll-Drucks.

In dem erfindungsgemäßen offenen Kreislauf ist eine Abstützung nur möglich, wenn der Schwenkwinkel der Antriebs-Hydromaschine 14 auf die richtige Richtung gestellt wird. (Schwenkwinkel in Richtung Vorwärts- oder Rückwärtsfahrt abhängig von der Stellung im Hang).

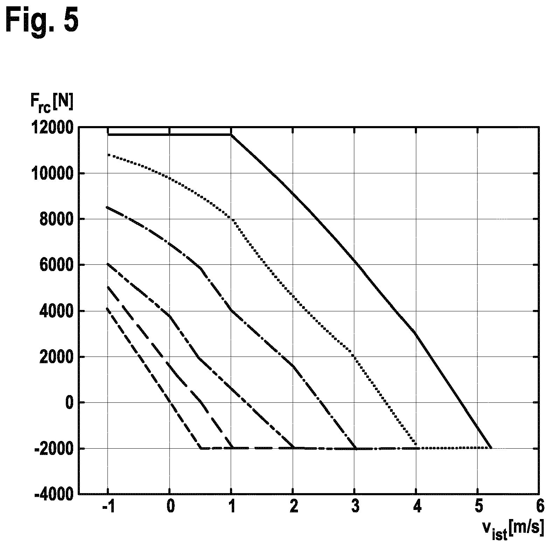

Figuren 4 und 5 zeigen jeweils ein Zugkraftkennfeld, wobei die Zugkräfte $F_{rc}$ über der aktuellen Geschwindigkeit

$v_{ist}$ aufgetragen sind. Die verschiedenen Zugkraftkennlinien $F_{rc}$ ergeben sich durch verschiedene Pedalstellungen.

Figur 4 zeigt ein Zugkraftkennfeld mit einem vergleichsweise weichen und lastfühligen Fahrverhalten, während Figur 5 ein Zugkraftkennfeld mit einem vergleichsweise harten und laststeifen Fahrverhalten zeigt.

Gemäß den Figuren 4 und 5 sind auch negative aktuelle Geschwindigkeiten $v_{ist}$ vorgesehen. Die beiden Zugkraftkennfelder berücksichtigen damit die Wunschrichtung der Geschwindigkeit. Negative aktuelle Geschwindigkeiten $v_{ist}$ bedeuten, dass die mobile Arbeitsmaschine 2 sich entgegen der Wunschrichtung (gegeben z.B. über einen FNR Schalter) bewegt.

Die einzelnen Zugkraftkennlinien $F_{rc}$ gemäß den Figuren 4 und 5 haben bei negativen aktuellen Geschwindigkeiten $v_{ist}$ einen starken Anstieg in Richtung zu positiven Zugkräften $F_{rc}$. Das führt dazu, dass die mobile Arbeitsmaschine 2 auch am Berg rückwärts nicht mehr abrollt (Stützwirkung bei Hangabfahrt), weil die Zugkraft $F_{rc}$ sofort erhöht wird, wenn die negative aktuelle Geschwindigkeit $v_{ist}$ (Abrollen) betragsmäßig steigt.

Wenn die mobile Arbeitsmaschine 2 vorwärts abrollt und schneller wird, wird die Zugkraft $F_{rc}$ negativ und bremst die mobile Arbeitsmaschine 2 vorwärts am Berg. Damit ist im offenen Kreis eine hydrostatische Abstützung in beide Wirkrichtungen erreicht.

Bezugszeichenliste

| | |
|---|---|
| 1 | hydraulisches System |
| 2 | mobile Arbeitsmaschine / Vorderlader |
| 4 | Hydromaschine (Primäreinheit) |
| 6 | Arbeitshydraulik |
| 8 | Fahrhydraulik |
| 10 | Verbrennungsmotor |
| 12 | Tank |
| 14 | Antriebs-Hydromaschine (Sekundäreinheit) |
| 16 | Systemdruckleitung |
| 17 | Triebwelle |
| 18 | Getriebe |
| 20 | Steueranordnung |
| 22 | Verbraucher / Hydrozylinder |
| 24 | Druckbegrenzungsventil |
| 26 | Speisepumpe |
| 28, 30, 32 | Fließrichtung |
| 34 | elektronische Systemsteuerung |
| 35 | Neigungssensor |
| 36 | Druckreduzierventil |
| 38, 44 | Stromregelventil |
| 40 | Rückschlagventil |
| 42 | Lastmeldeleitung |
| 46, 48 | Schritt |

| | |
|---|---|
| $F_{rc}$ | Zugkraft / Zugkraftkennlinie |
| pMax, minAngle | erstes Extremum |
| pMin, maxAngle | zweites Extremum |
| $v_{ist}$ | aktuelle Fahrgeschwindigkeit |
| $v_{soll}$ | Geschwindigkeitswunsch |

**Patentansprüche**

**1.** Hydraulisches System für eine mobile Arbeitsmaschine (2) mit einer Hydromaschine (4) zur Druckmittelversorgung einer Arbeitshydraulik (6) der mobilen Arbeitsmaschine (2) und einer Fahrhydraulik (8) der mobilen Arbeitsmaschine (2), wobei die Druckmittelversorgung im offenen hydraulischen Kreis erfolgt, wobei die Arbeitshydraulik (6) zumindest einen hydraulischen Verbraucher (22) hat, und wobei die Fahrhydraulik (8) zumindest eine verstellbare Antriebs-Hydromaschine (14) aufweist, die zur Fortbewegung der mobilen Arbeitsmaschine (2) eingesetzt ist, wobei die Hydromaschine (4) basierend auf einem Soll-Druck gesteuert ist, wobei die Antriebs-Hydromaschine (14) basierend auf ihrem verstellbaren Schwenkwinkel oder Hubvolumen gesteuert ist, und **dadurch gekennzeichnet, dass** eine elektronische Systemsteuerung (34) vorgesehen ist, die derart eingerichtet ist, dass der Soll-Druck der Hydromaschine (4) als Maximalwert aus einer Soll-Druckvorgabe der Arbeitshydraulik (6) und einer Soll-Druckvorgabe der Fahrhydraulik (8) ausgewählt ist, wobei die Soll-Druckvorgabe der Antriebs-Hydromaschine (14) der Fahrhydraulik (8) von einem Drehmomentwunsch und/oder von einem Geschwindigkeitswunsch ($v_{soll}$) einer Bedienperson der mobilen Arbeitsmaschine (2) und/oder von einer aktuellen Fahrgeschwindigkeit ($v_{ist}$) der mobilen Arbeitsmaschine (2) abhängt, der/die über zumindest ein entsprechendes Mittel vorgebbar ist/sind.

2. Hydraulisches System nach Anspruch 1 wobei in der elektronischen Systemsteuerung (34) eine Zugkraftkennlinie ($F_{rc}$) hinterlegt ist, die eine Zugkraft ($F_{rc}$) in Abhängigkeit der aktuellen Fahrgeschwindigkeit ($v_{ist}$) definiert, wobei auch Zugkräfte ($F_{rc}$) in Abhängigkeit von negativen aktuellen Fahrgeschwindigkeiten ($v_{ist}$) definiert sind.

3. Hydraulisches System nach Anspruch 2, wobei mehrere Zugkraftkennlinien ($F_{rc}$) in Abhängigkeit von einer Pedalstellung in einem Zugkraftkennfeld zusammengefasst sind, das in der elektronischen Systemsteuerung (34) hinterlegt ist.

4. Hydraulisches System nach Anspruch 3, wobei in der elektronischen Systemsteuerung (34) mehrere wählbare Zugkraftkennfelder für ein unterschiedlich steifes und/oder unterschiedlich lastfühliges Verhalten der Fahrhydraulik (8) hinterlegt sind.

5. Hydraulisches System nach einem der vorhergehenden Ansprüche, wobei die Arbeitshydraulik (6) über zumindest ein Steuerventil mit der Hydromaschine (4) verbunden ist.

6. Hydraulisches System nach einem der vorhergehenden Ansprüche, wobei die Hydromaschine (4) als einzige Hydromaschine zum Antreiben der Arbeitshydraulik (6) und der Fahrhydraulik (8) vorgesehen ist.

7. Hydraulisches System nach einem der vorhergehenden Ansprüche, wobei die Fahrhydraulik (8) und die Arbeitshydraulik (6) fluidisch parallel mit der Hydromaschine (4) fluidisch verbunden sind.

8. Hydraulisches System nach Anspruch 5, wobei der zumindest eine hydraulische Verbraucher (22) der Arbeitshydraulik (6) über eine Load-Sensing(LS)-Steueranordnung oder eine Lastdruckunabhängige-Durchflussverteilung(LUDV)-Steueranordnung (20) gesteuert ist, wobei die Steueranordnung (20) des zumindest einen hydraulischen Verbrauchers (22) das Steuerventil oder mehrere Steuerventile aufweist.

9. Hydraulisches System nach Anspruch 8, wobei die Soll-Druckvorgabe der LS- oder LUDV-Steueranordnung (20) aus einem Lastdruck des hydraulischen Verbrauchers (22) oder aus einem höchsten Lastdruck bei mehreren hydraulischen Verbrauchern und einer LS-Druckdifferenz gebildet ist.

10. Hydraulisches System nach einem der vorhergehenden Ansprüche, wobei die Antriebs-Hydromaschine (14) mit einer Triebwelle (17) verbunden ist, und wobei ein Soll-Drehmoment der Triebwelle (17), das über die Antriebs-Hydromaschine (14) aufbringbar ist, zu der Soll-Druckvorgabe der Fahrhydraulik (8) korrespondiert.

11. Hydraulisches System nach einem der vorhergehenden Ansprüche, wobei ein Mittel (35) zum Ermitteln einer Neigung der mobilen Arbeitsmaschine (2) vorgesehen ist.

12. Hydraulisches System nach Anspruch 11, wobei die elektronische Systemsteuerung (34) anhand der Neigung, die über das Mittel (35) erfassbar ist, und der Masse der mobilen Arbeitsmaschine (2) ein Drehmoment ermittelt, das für die Ermittlung der Soll-Druckvorgabe der Fahrhydraulik (8) verwendet wird.

13. Hydraulisches System nach einem der vorhergehenden Ansprüche, wobei fluidisch zwischen der Antriebs-Hydromaschine (14) und der Hydromaschine (4) zumindest kein Wegeventil oder zumindest kein proportional verstellbares Wegeventil vorgesehen ist.

14. Verfahren mit einem hydraulischen System (1) gemäß einem der vorhergehenden Ansprüche, wobei über die elektronische Systemsteuerung (34) ein Soll-Druck der Hydromaschine (4) als Maximalwert aus einer Soll-Druckvorgabe der Arbeitshydraulik (6) und einer Soll-Druckvorgabe der Fahrhydraulik (8) ausgewählt wird.

15. Verfahren nach Anspruch 14, wobei ein Hubvolumen der Antriebs-Hydromaschine (14) angepasst wird, wenn der Soll-Druck, der über die elektronische Systemsteuerung (34) ausgewählt wird, auf der Soll-Druckvorgabe der Arbeitshydraulik (6) basiert, wobei die Anpassung des Hubvolumens der Antriebs-Hydromaschine (14) dann erfolgt, wenn der über die elektronische Systemsteuerung (34) ausgewählte Soll-Druck, der auf der Soll-Druckvorgabe der Arbeitshydraulik (6) basiert, höher ist, als von der Fahrhydraulik (8) gefordert, und wobei die Anpassung des Hubvolumens der Antriebs-Hydromaschine (14) derart erfolgt, dass die Antriebs-Hydromaschine (14) den Drehmomentwunsch und/oder den Geschwindigkeitswunsch ($v_{soll}$) erfüllt.

16. Verfahren nach Anspruch 15, wobei die Soll-Druckvorgabe der Fahrhydraulik (8) aus einem gewichteten Zwischenwert oder Mittelwert eines ersten Extremums (pMax, minAngle) und eines zweiten Extremums (pMin, maxAngle) ermittelt wird, wobei das erste Extremum (pMax, minAngle) ein maximaler Systemdruck und ein minimaler Schwenkwinkel der Antrieb-Hydromaschine (14) ist, und wobei das zweite Extremum (pMin, maxAngle) einen maximalen Schwenkwinkel der Antrieb-Hydromaschine (14) und ein minimaler Systemdruck ist.

17. Verfahren nach Anspruch 16, wobei beim Anfahren zunächst das zweite Extremums (pMin, maxAngle) höher gewichtet wird, als das erste Extremum (pMax, minAngle), und wobei danach die Gewichtung des ersten Extremum (pMax, minAngle) zunimmt.

18. Verwendung des hydraulischen Systems (1) gemäß den Ansprüchen 1 bis 14 in einer mobilen Arbeitsmaschine in Form einer Hubarbeitsbühne oder in Form eines Vorderladers (2) oder in Form eines Radladers oder in Form eines Telehandlers.

## Claims

1. Hydraulic system for a mobile working machine (2) with a hydraulic machine (4) for supplying a working hydraulic system (6) of the mobile working machine (2) and a driving hydraulic system (8) of the mobile working machine (2) with pressure medium, wherein the pressure medium supply takes place in an open hydraulic circuit, wherein the working hydraulic system (6) has at least one hydraulic consumer (22), and wherein the driving hydraulic system (8) has at least one adjustable drive hydraulic machine (14) which is used for the movement of the mobile working machine (2), wherein the hydraulic machine (4) is controlled based on a setpoint pressure, wherein the drive hydraulic machine (14) is controlled based on its adjustable swash angle or swept volume, and **characterized in that** an electronic system controller (34) is provided which is configured in such a way that the setpoint pressure of the hydraulic machine (4) is selected as a maximum value from a setpoint pressure specification of the working hydraulic system (6) and a setpoint pressure specification of the driving hydraulic system (8), wherein the setpoint pressure specification of the drive hydraulic machine (14) of the driving hydraulic system (8) depends on a torque request and/or of a speed request ($v_{soll}$) of an operator of the mobile working machine (2) and/or on a current driving speed ($v_{ist}$) of the mobile working machine (2), which can be specified via at least one corresponding means.

2. Hydraulic system according to Claim 1, wherein a traction force characteristic ($F_{rc}$) is stored in the electronic system controller (34), which traction force characteristic defines a traction force ($F_{rc}$) as a function of the current driving speed ($v_{ist}$), wherein traction forces ($F_{rc}$) are also defined as a function of negative current driving speeds ($v_{ist}$).

3. Hydraulic system according to Claim 2, wherein a plurality of traction force characteristics ($F_{rc}$) are combined as a function of a pedal position in a traction force map which is stored in the electronic system controller (34).

4. Hydraulic system according to Claim 3, wherein a plurality of selectable traction force maps for a differently rigid and/or differently load-sensitive behaviour of the traction hydraulic system (8) are stored in the electronic system controller (34).

5. Hydraulic system according to one of the preceding claims, wherein the working hydraulic system (6) is connected to the hydraulic machine (4) via at least one control valve.

6. Hydraulic system according to one of the preceding claims, wherein the hydraulic machine (4) is provided as the only hydraulic machine for driving the working hydraulic system (6) and the driving hydraulic system (8).

7. Hydraulic system according to one of the preceding claims, wherein the driving hydraulic system (8) and the working hydraulic system (6) are fluidically connected fluidically in parallel to the hydraulic machine (4).

8. Hydraulic system according to Claim 5, wherein the at least one hydraulic consumer (22) of the working hydraulic system (6) is controlled via a load-sensing (LS) control arrangement or a load pressure-independent throughflow distribution (LUDV) control arrangement (20), wherein the control arrangement (20) of the at least one hydraulic consumer (22) has the control valve or a plurality of control valves.

9. Hydraulic system according to Claim 8, wherein the setpoint pressure specification of the LS or LUDV control arrangement (20) is formed from a load pressure of the hydraulic consumer (22) or from a maximum load pressure in the case of a plurality of hydraulic consumers and an LS pressure difference.

10. Hydraulic system according to one of the preceding claims, wherein the drive hydraulic machine (14) is connected to a drive shaft (17), and wherein a setpoint torque of the drive shaft (17), which can be applied via the drive hydraulic machine (14), corresponds to the setpoint pressure specification of the driving hydraulic system (8).

11. Hydraulic system according to one of the preceding claims, wherein a means (35) for determining an inclination of the mobile working machine (2) is provided.

12. Hydraulic system according to Claim 11, wherein the electronic system controller (34) determines a torque on the basis of the inclination, which can be detected via the means (35), and the mass of the mobile working machine (2), which torque is used for the determination of the setpoint pressure specification of the driving hydraulic system (8).

13. Hydraulic system according to one of the preceding claims, wherein at least no directional valve or at least no proportionally adjustable directional valve is provided fluidically between the drive hydraulic machine (14) and the hydraulic machine (4).

14. Method with a hydraulic system (1) according to one of the preceding claims, wherein a setpoint pressure of the hydraulic machine (4) is selected as a maximum value from a setpoint pressure specification of the working hydraulic system (6) and a setpoint pressure specification of the driving hydraulic system (8) via the electronic system controller (34).

15. Method according to Claim 14, wherein a swept volume of the drive hydraulic machine (14) is adapted if the setpoint pressure, which is selected via the electronic system controller (34), is based on the setpoint pressure specification of the working hydraulic system (6), wherein the adaptation of the swept volume of the drive hydraulic machine (14) takes place when the setpoint pressure selected via the electronic system controller (34), which is based on the setpoint pressure specification of the working hydraulic system (6), is higher than required by the driving hydraulic system (8), and wherein the swept volume of the drive hydraulic machine (14) is adapted in such a way that the drive hydraulic machine (14) fulfils the torque requirement and/or the speed requirement ($v_{soll}$).

16. Method according to Claim 15, wherein the setpoint pressure specification of the driving hydraulic system (8) is determined from a weighted intermediate value or average value of a first extremum (pMax, minAngle) and a second extremum (pMin, maxAngle), wherein the first extremum (pMax, minAngle) is a maximum system pressure and a minimum swash angle of the drive hydraulic machine (14), and wherein the second extremum (pMin, maxAngle) is a maximum swash angle of the drive hydraulic machine (14) and a minimum system pressure.

17. Method according to Claim 16, wherein, during start up, the second extremum (pMin, maxAngle) is first of all weighted higher than the first extremum (pMax, minAngle), and wherein the weighting of the first extremum (pMax, minAngle) subsequently increases.

18. Use of the hydraulic system (1) according to Claims 1 to 14 in a mobile working machine in the form of a lifting platform or in the form of a front loader (2) or in the form of a wheel loader or in the form of a telehandler.

**Revendications**

1. Système hydraulique pour une machine de travail mobile (2) avec une machine hydraulique (4) pour l'alimentation en fluide sous pression d'une hydraulique de travail (6) de la machine de travail mobile (2) et d'une hydraulique de conduite (8) de la machine de travail mobile (2), l'alimentation en fluide sous pression s'effectuant en circuit hydraulique ouvert, l'hydraulique de travail (6) ayant au moins un consommateur hydraulique (22), et l'hydraulique de conduite (8) présentant au moins une machine hydraulique d'entraînement (14) réglable, qui est utilisée pour le déplacement de la machine de travail mobile (2), la machine hydraulique (4) étant commandée sur la base d'une pression de consigne, la machine hydraulique d'entraînement (14) étant commandée sur la base de son angle de pivotement ou de son volume de course réglable, et **caractérisé en ce qu'**il est prévu une commande de système électronique (34) qui est adaptée de telle sorte que la pression de consigne de la machine hydraulique (4) est sélectionnée comme valeur maximale parmi une instruction de pression de consigne de l'hydraulique de travail (6) et une instruction de pression de consigne de l'hydraulique de conduite (8), l'instruction de pression de consigne de la machine hydraulique d'entraînement (14) de l'hydraulique de conduite (8) dépendant d'un couple souhaité et/ou d'une vitesse souhaitée ($v_{soll}$) d'un opérateur de la machine de travail mobile (2) et/ou d'une vitesse de conduite actuelle ($v_{ist}$) de la machine de travail mobile (2), qui peut/peuvent être prédéfini(e)s par au moins un moyen correspondant.

2. Système hydraulique selon la revendication 1, dans lequel une courbe caractéristique de force de traction ($F_{rc}$) est mémorisée dans la commande de système électronique (34), laquelle définit une force de traction ($F_{rc}$) en fonction de la vitesse de conduite actuelle ($v_{ist}$), des forces de traction ($F_{rc}$) étant également définies en fonction de vitesses de conduite actuelles négatives ($V_{ist}$).

3. Système hydraulique selon la revendication 2, dans lequel plusieurs courbes caractéristiques de force de traction ($F_{rc}$) sont regroupées en fonction d'une position de pédale dans un champ caractéristique de force de traction qui est mémorisé dans la commande de système électronique (34).

4. Système hydraulique selon la revendication 3, dans lequel plusieurs champs caractéristique de force de traction sélectionnables sont mémorisés dans la commande de système électronique (34) pour un comportement de rigidité différente et/ou de sensibilité à la charge différente de l'hydraulique de conduite (8).

5. Système hydraulique selon l'une quelconque des revendications précédentes, dans lequel l'hydraulique de travail (6) est reliée à la machine hydraulique (4) par l'intermédiaire d'au moins une soupape de commande.

6. Système hydraulique selon l'une quelconque des revendications précédentes, dans lequel la machine hydraulique (4) est prévue comme machine hydraulique unique pour entraîner l'hydraulique de travail (6) et l'hydraulique de conduite (8).

7. Système hydraulique selon l'une quelconque des revendications précédentes, dans lequel l'hydraulique de conduite (8) et l'hydraulique de travail (6) sont reliées fluidiquement en parallèle à la machine hydraulique (4).

8. Système hydraulique selon la revendication 5, dans lequel l'au moins un consommateur hydraulique (22) de l'hydraulique de travail (6) est commandé par l'intermédiaire d'un agencement de commande Load-Sensing (LS) ou d'un agencement de commande (20) de distribution de débit indépendante de la pression de charge (LUDV), l'agencement de commande (20) de l'au moins un consommateur hydraulique (22) présentant la soupape de commande ou plusieurs soupapes de commande.

9. Système hydraulique selon la revendication 8, dans lequel l'instruction de pression de consigne de l'agencement de commande LS ou LUDV (20) est formée à partir d'une pression de charge du consommateur hydraulique (22) ou d'une pression de charge maximale dans le cas de plusieurs consommateurs hydrauliques et d'une différence de pression LS.

10. Système hydraulique selon l'une quelconque des revendications précédentes, dans lequel la machine hydraulique d'entraînement (14) est reliée à un arbre moteur (17), et dans lequel un couple de consigne de l'arbre moteur (17), qui peut être appliqué par l'intermédiaire de la machine hydraulique d'entraînement (14), correspond à l'instruction de pression de consigne de l'hydraulique de conduite (8).

11. Système hydraulique selon l'une quelconque des revendications précédentes, dans lequel il est prévu un moyen (35) pour déterminer une inclinaison de la machine de travail mobile (2).

12. Système hydraulique selon la revendication 11, dans lequel la commande de système électronique (34) détermine, à l'aide de l'inclinaison qui peut être détectée par l'intermédiaire du moyen (35) et de la masse de la machine de travail mobile (2), un couple qui est utilisé pour déterminer l'instruction de pression de consigne de l'hydraulique de conduite (8).

13. Système hydraulique selon l'une quelconque des revendications précédentes, dans lequel il n'est pas prévu, sur le plan fluidique, entre la machine hydraulique d'entraînement (14) et la machine hydraulique (4), au moins un distributeur ou au moins un distributeur à réglage proportionnel.

14. Procédé avec un système hydraulique (1) selon l'une quelconque des revendications précédentes, dans lequel une pression de consigne de la machine hydraulique (4) est sélectionnée comme valeur maximale parmi une instruction de pression de consigne de l'hydraulique de travail (6) et une instruction de pression de consigne de l'hydraulique de conduite (8) par l'intermédiaire de la commande de système électronique (34).

15. Procédé selon la revendication 14, dans lequel un volume de course de la machine hydraulique d'entraînement (14) est adapté lorsque la pression de consigne, qui est sélectionnée par l'intermédiaire de la commande de système électronique (34), est basée sur l'instruction de pression de consigne de l'hydraulique de travail (6), l'adaptation du volume de course de la machine hydraulique d'entraînement (14) s'effectuant lorsque la pression de consigne sélectionnée par l'intermédiaire de la commande de système électronique (34), qui est basée sur l'instruction de pression de consigne de l'hydraulique de travail (6), est supérieure à celle requise par l'hydraulique de conduite (8), et l'adaptation du volume de course de la machine hydraulique d'entraînement (14) s'effectuant de telle sorte que la machine hydraulique d'entraînement (14) satisfait au couple souhaité et/ou à la vitesse souhaitée ($v_{soll}$).

16. Procédé selon la revendication 15, dans lequel l'instruction de pression de consigne de l'hydraulique de conduite (8) est déterminée à partir d'une valeur intermédiaire pondérée ou d'une valeur moyenne d'un premier extremum (pMax, minAngle) et d'un deuxième extremum (pMin, maxAngle), le premier extremum (pMax, minAngle) étant une pression de système maximale et un angle de pivotement minimal de la machine hydraulique d'entraînement (14), et le deuxième extremum (pMin, maxAngle) étant un angle de pivotement maximal de la machine hydraulique d'entraînement (14) et une pression de système minimale.

17. Procédé selon la revendication 16, dans lequel, lors du démarrage, le deuxième extremum (pMin, maxAngle) est d'abord pondéré plus fortement que le premier extremum (pMax, minAngle), et dans lequel la pondération du premier extremum (pMax, minAngle) augmente ensuite.

18. Utilisation du système hydraulique (1) selon les revendications 1 à 14 dans une machine de travail mobile sous la forme d'une plate-forme de travail élévatrice ou sous la forme d'une chargeuse frontale (2) ou sous la forme d'une chargeuse sur roues ou sous la forme d'un télémanipulateur.

# Fig. 1

# Fig. 2

# Fig. 3

# Fig. 4

# Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018217566 A1
- DE 102016205891 A1
- US 5638677 A